(19) Europäisches Patentamt / European Patent Office / Office européen des brevets

(11) **EP 2 722 197 B1**

(12) **EUROPEAN PATENT SPECIFICATION**

(45) Date of publication and mention
of the grant of the patent:
**01.06.2016 Bulletin 2016/22**

(21) Application number: **12800806.7**

(22) Date of filing: **13.06.2012**

(51) Int Cl.:
**B60C 9/08** *(2006.01)*  **B60C 9/00** *(2006.01)*
**B60C 13/00** *(2006.01)*  **B60C 9/02** *(2006.01)*
**B60C 9/04** *(2006.01)*

(86) International application number:
**PCT/JP2012/065165**

(87) International publication number:
**WO 2012/173158 (20.12.2012 Gazette 2012/51)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2011 JP 2011132575**

(43) Date of publication of application:
**23.04.2014 Bulletin 2014/17**

(73) Proprietor: **Bridgestone Corporation
Tokyo 104-8340 (JP)**

(72) Inventor: **YOSHIMI Takuya
Kodaira-shi
Tokyo 187-0031 (JP)**

(74) Representative: **Oxley, Robin John George et al
Marks & Clerk LLP
90 Long Acre
London WC2E 9RA (GB)**

(56) References cited:
**JP-A- 2001 138 708    JP-A- 2001 140 142
JP-A- 2002 002 214    JP-A- 2010 120 400**

**Description**

TECHNICAL FIELD

The present invention relates to a pneumatic tire (hereinafter, also simply referred to as "tire"), and more specifically, a pneumatic tire in which the carcass structure is improved.

BACKGROUND ART

In recent years, with respect to a pneumatic tire, the need for low fuel consumption and light weight is ever-increasing. As a method of improving such performances, it is conceivable to decrease the thickness of the tire. It is, however, difficult to decrease the gauge of a tread portion from the viewpoint of securing the anti-abrasion performance. Therefore, a technique for decreasing the gauge of a side portion has become very important and useful.

Decrease in the gauge of a side portion, however, also involves a risk for performances. For example, the decrease may deteriorate the scratch resistance or crack resistance, and, at the same time, may deteriorate the safety factor (the pressure break resistance) and the cut resistance which are basic performances needed for a side portion. As a means for compensating such disadvantages, it is conceivable, for example, to increase the strength of a treat by enlarging the diameter of a reinforcing cord used for a carcass, increasing the end count of the reinforcing cord, or changing the material or physical properties of the reinforcing cord to improve the breaking strength. Increase in the number of carcasses from one to two is also an effective means.

As a conventional art relating to the improvement of a reinforcing cord of a carcass ply, for example, Patent Documents 1 and 2 disclose a technique of using a polyester cord for a carcass ply having a cord strength after adhesive treatment of 4.5 cN/dtex or higher, and having a bending rigidity per one cord of 15 to 50 cN.

RELETED ART DOCUMENTS

PATENT DOCUMENTS

Patent Document 1: Japanese Unexamined Patent Application Publication No. 2008-001163 (claims or the like)
Patent Document 2: Japanese Unexamined Patent Application Publication No. 2008-001164 (claims or the like)

SUMMARY OF THE INVENTION

PROBLEMS TO BE SOLVED BY THE INVENTION

However, a means of enlarging the diameter of a cord used for a carcass, a means of increasing the end count, or a means of increasing the number of carcasses conflicts with decrease in the gauge of a side portion from the viewpoint of light weight since these means cause increase in the weight of a tire. When the diameter of a cord is enlarged or the end count is increased, separation due to deformation during travelling is likely to occur since the percentage of void is reduced, and the durability deteriorates, which is also problematic. Further, regarding the means of improving the breaking strength, although it is conventionally possible to improve the breaking strength of a cord by changing the number of twist or conditions of a heat treatment in the case of rayon or polyethylene terephthalate (PET) which is used for a carcass, the means of improving the breaking strength has a negative effect that deterioration of fatigability is caused.

Therefore, there is no satisfactory technique yet for securing required performances other than low fuel consumption and light weight of a tire, when low fuel consumption and light weight of a tire are attained by decreasing the gauge of a side portion, without compromising the effect thereof.

Accordingly an object of the present invention is to resolve the above-mentioned problems and to provide a pneumatic tire in which basic performances needed for a side portion can be satisfied without compromising a light weight effect due to decrease in the gauge of the side portion.

MEANS FOR SOLVING THE PROBLEMS

The present inventors intensively studied to discover that the above-mentioned problems can be resolved by setting the occupancy rate of an organic fiber cord of a treat which constitutes a carcass, and the ratio of the diameter of the organic fiber cord and the gauge of a tire in a side wall portion to specific ranges, thereby completing the present invention.

Specifically, the pneumatic tire of the present invention is a pneumatic tire which is composed of a pair of bead portions, a pair of side wall portions extending from the pair of bead portions, and a tread portion bridging both side wall portions and which comprises one or more carcasses extending toroidally between the pair of bead portions, characterized in that

the carcass is constituted of a treat which is an organic fiber cord coated with rubber; the occupancy rate of the organic fiber cord in the treat is 70% or higher; and the ratio of the cord diameter φ (mm) of the organic fiber cord as a dip treated cord to the minimum value D (mm) of the gauge in the thickness direction of the tire at an external region of the side wall portion in the tire radial direction from the maximum width portion of a tire when the tire is mounted to a rim satisfies the relationship represented by the expression below:

$$0.25 < \varphi/D < 0.50.$$

In the present invention, the cord diameter φ of the organic fiber cord as a dip treated cord is suitably larger than 0.75 mm and smaller than 0.96 mm, and the cord strength of the organic fiber cord as a dip treated cord is suitably 6.5 to 7.2 cN/dtex. In the present invention, the total decitex of the organic fiber cord as a twisted cord is suitably 4300 to 5100 dtex, and the cord elongation of the organic fiber cord as a dip treated cord at a stress loading of 2 cN/dtex is suitably 3.5 to 4.0%.

Further, in the present invention, the strength of the treat per unit width is suitably 2.9 to 3.2 kN/cm, and the heat shrinkage stress of the organic fiber cord as a dip treated cord at 177°C is suitably 6 to 12 N. Still further, the twist coefficient α of the organic fiber cord defined by the expression below:

$$\alpha = \tan\theta = 0.001 \times N \times \sqrt{(0.125 \times d/\rho)}$$

(in the expression, N is the number of twist (/10 cm), d is a value which is half of the total decitex of a cord, and p is the specific gravity of the cord) is suitably 0.42 to 0.55.

Still further, in the present invention, preferably, one side of the treat is subjected to an electron beam irradiation treatment as a pre-vulcanization under the following conditions: an accelerating voltage of 200 kV or higher and smaller than 600 kV, and an irradiation dose of 10 to 100 kGy; and the treat is placed such that the irradiated area is on the inside of the tire. Still further, in the present invention, preferably, the organic fiber cord is composed of polyester fiber, and more preferably, the organic fiber cord is composed of a polyethylene terephthalate fiber.

EFFECTS OF THE INVENTION

According to the present invention, by employing the above-mentioned constitution, it becomes possible to attain a pneumatic tire in which basic performances needed for a side portion can be satisfied without compromising a light weight effect due to decrease in the gauge of the side portion.

BRIEF DESCRIPTION OF THE DRAWINGS

Fig. 1 is a half sectional view of one example of a pneumatic tire of the present invention in the width direction.
Fig. 2 is a half sectional view of another example of a pneumatic tire of the present invention in the width direction.

MODE FOR CARRYING OUT THE INVENTION

Embodiments of the present invention will now be described in detail with reference to the drawings.

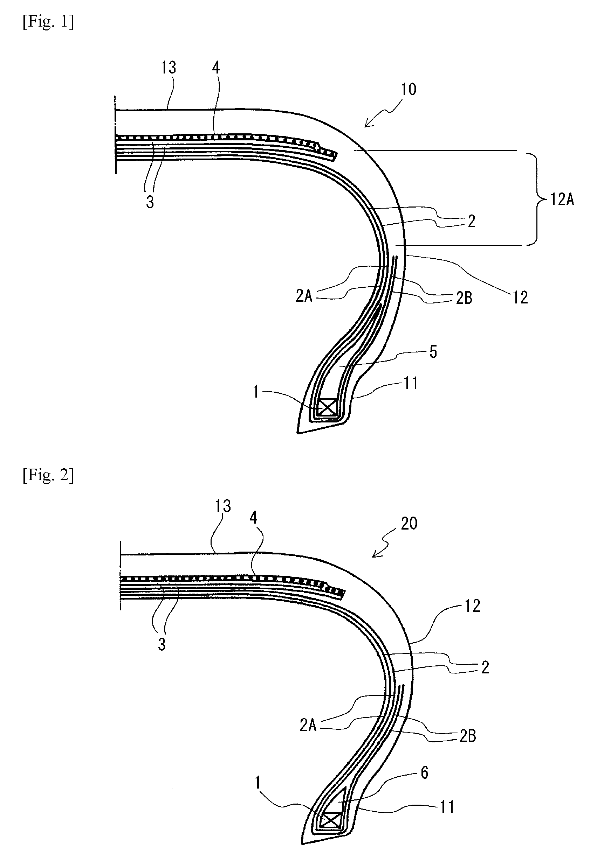

Fig. 1 is a cross-sectional view in the width direction of one example of a pneumatic tire of the present invention. The illustrated pneumatic tire 10 of the present invention is composed of a pair of bead portions 11, a pair of side wall portions 12 extending therefrom, a tread portion 13 extending between both sides of the side wall portions 12, and provided with one or more carcasses 2 reinforcing all of the portions between a pair of bead cores 1 embedded in the bead portions 11 respectively.
In the present invention, it is important that the carcass 2 is constituted of a treat which is an organic fiber cord coated with rubber; the occupancy rate of the organic fiber cord in the treat is 70% or higher; and the ratio of the cord diameter φ (mm) of the organic fiber cord as a dip treated cord to the minimum value D (mm) of the gauge in the thickness direction of the tire at an external region of the side wall portion in the tire radial direction from the maximum width portion of a tire when the tire is mounted to a rim satisfies the relationship represented by the expression below:

$$0.25 < \varphi/D < 0.50.$$

Here, in the present invention, the external region of the side wall portion 12 in the tire radial direction from the maximum width portion of a tire when the tire is mounted to a rim is referred to as a tread side region 12A of a side wall portion. By setting the occupancy rate of organic fiber cord in a treat which constitutes a carcass to 70% or higher, suitably 70 to 80%, a light weight can be attained while maintaining the strength of a treat. In addition, by setting the value of ratio $\varphi/D$ in a range represented by the above-mentioned expression, suitably in a range larger than 0.3 and smaller than 0.4, effects of light weight and prevention of side cut can also be obtained. In other words, even when the light weight is attained by decreasing the gauge of the tread side region 12A of a side wall portion to such an extent that the above-mentioned value of ratio $\varphi/D$ at the thinnest region is satisfied, a sufficient durability (side cut resistance) can be secured by setting the above-mentioned occupancy rate to as high as 70% or higher. Therefore, in the present invention, by setting the above-mentioned occupancy rate and value of ratio $\varphi/D$ in specific ranges, an excellent cut resistance as basic properties needed for a side portion can be realized without compromising a light weight effect caused by decrease in gauge of a side portion.

Here the occupancy rate of an organic fiber cord in a treat is defined by the following expression:

$$\text{occupancy rate } (\%) = \text{cord gauge (mm)} \times \text{end count (/cm)}/10 \times 100,$$

which means the occupancy rate of a cord in the arrangement direction of the cord. When the above-mentioned occupancy rate is smaller lightweighthan 70%, a sufficient strength of a treat can not be secured. When the above-mentioned value of ratio $\varphi/D$ is 0.25 or smaller, the size of the cord diameter becomes small, and a sufficient strength of a treat can not be secured, thereby deteriorating the side cut resistance. On the other hand, although, when the above-mentioned value of ratio $\varphi/D$ is 0.50 or higher, the strength of a treat can be secured and therefore the cut resistance is not concerned about, the gauge of a side rubber which exists on the outside of a carcass cord is small, which deteriorates the crack resistance. Accordingly, in any of the above cases, an expected effect of the invention is not obtained.

More concretely, in the present invention, it is preferred that a relatively thick cord whose total decitex as a twisted cord is in a range of 4300 to 5100 dtex is used as an organic fiber cord used for a carcass, and is subjected to an appropriate dip treatment to adjust the cord strength as a dip treated cord in a range of 6.5 to 7.2 cN/dtex. When a treat in which the above-mentioned occupancy rate is satisfied is formed by using an organic fiber cord which satisfies conditions of such a total decitex and a cord strength, an excellent strength of a treat is obtained. Here, in the present invention, a suitable strength of a treat is in a range of 2.9 to 3.2 kN/cm per unit width of a treat. When the above-mentioned total decitex of an organic fiber cord used for a carcass is too low or when the above-mentioned cord strength is too low, a sufficient strength of a treat may not be obtained. When the above-mentioned total decitex of an organic fiber cord used for a carcass is too high or when the above-mentioned cord strength is too high, the light weight may be compromised although the strength of a treat becomes high.

In the present invention, the cord diameter $\varphi$ of the above-mentioned organic fiber cord as a dip treated cord is suitably larger than 0.75 mm and smaller than 0.96 mm. By setting the cord diameter of the above-mentioned organic fiber cord in this range, a high cord strength and a small treat gauge can be secured. When the cord diameter is too small, a sufficient cord strength may not be obtained. When the cord diameter is too large, the treat gauge becomes too large, and the light weight may be compromised.

In the present invention, suitably, the cord elongation of the above-mentioned organic fiber cord as a dip treated cord at a stress loading of 2 cN/dtex is 3.5 to 4.0%, and the heat shrinkage stress of the above-mentioned organic fiber cord as a dip treated cord per one cord at 177°C is 6 to 12 N. By setting the above-mentioned cord elongation or the heat shrinkage stress in the above-mentioned range, the occurrence of manufacturing failure such as an inner surface cord protrusion can be inhibited. When the cord elongation of the above-mentioned organic fiber cord is smaller than 3.5%, in the case of manufacturing by extension of a carcass at the time of vulcanization, the occurrence rate of the inner surface cord protrusion drastically increases. On the other hand, when the cord elongation of the above-mentioned organic fiber cord is larger than 4.0%, ununiformity of the cord elongation after extension and vulcanization on the circumference is likely to be generated, causing deterioration of uniformity at a high probability. When the heat shrinkage stress of the above-mentioned organic fiber cord is smaller than 6 N, the effect of inhibiting a diameter growth due to traveling at a high speed (at the time of heating) is small, and an effect of improving the durability may not be obtained. On the other hand, when the heat shrinkage stress of the above-mentioned organic fiber cord is larger than 12 N, the cord shrinkage force at the time of vulcanization is too large, whereby the percentage of the inner surface cord protrusion failure may be too high.

Here, in the present invention, examples of a method of obtaining an organic fiber cord which satisfies a cord strength and a cord elongation in the above-mentioned predetermined ranges or the like include a method of adjusting temperature, tension and exposure time as conditions of a dip treatment. Concretely, for example, in a dipping process of a polyester fiber cord, when the tension is increased, the cord strength tends to be large, and the cord elongation at a stress loading of 2 cN/dtex tends to be small. Further, when the temperature or the exposure time is increased, the cord strength tends to be small, and the cord elongation at a stress loading of 2 cN/dtex tends to be small. Accordingly, by appropriately combining and adjusting such dipping conditions, physical properties of the cord can be controlled as desired.

In the present invention, the twist coefficient $\alpha$ of the organic fiber cord defined by the expression below:

$$\alpha = \tan\theta = 0.001 \times N \times \sqrt{(0.125 \times d/\rho)}$$

(in the expression, N represents the number of twist (/10 cm), d represents a value which is half of the total decitex of the cord and $\rho$ represents a specific gravity of the cord) is preferably 0.42 to 0.55. When the twist coefficient is smaller than 0.42, it may be difficult to secure durability in market due to deterioration of fatigability. On the other hand, when the twist coefficient is larger than 0.55, the heat shrinkage stress of the cord becomes large and the rate of failure is increased and the gauge of the cord is increased, leading to an increase in the weight.

The carcass 2 of the tire in the figure is composed of one carcass ply, and in the present invention, the number of carcass plies which constitute the carcass 2 is not limited thereto and two or more carcass plies may be used. The structure thereof is also not particularly limited thereto. The engaging structure of the radial carcass 2 in the bead portion is also not limited to a structure which is rolled up around the bead core to be engaged as shown in the figure, and may be a structure in which the end of the radial carcass is sandwiched by two layers of bead cores (not shown in the figure). In the present invention, the organic fiber cord used for a carcass can be composed of polyester fiber such as polyethylene terephthalate (PET) fiber, polyethylene naphthalate (PEN) fiber and polybutylene terephthalate (PBT) fiber. Among those, PET fiber is preferably used.

Further, in the present invention, when a carcass treat composed of the above-mentioned organic fiber cord is applied to a tire, it is preferred that one side of the treat is preferably subjected to an electron beam irradiation treatment as a pre-vulcanization, under an accelerating voltage of 200 kV or higher and lower than 600 kV, an irradiation dose of 10 to 100 kGy, and the irradiated area is preferably positioned inside the tire that is on the side of inner liner to mold the tire. By this, the effect of suppressing the occurrence of tire inner surface cord protrusion can be obtained, which also leads to a reduction in weight of the tire. Here, when the accelerating voltage at the time of irradiating an electron beam is lower than 200 kV, the penetration of the electron beam becomes insufficient, and the pre-vulcanization is only performed on the surface of the carcass treat, and therefore, the effect of suppressing the occurrence of tire inner surface cord protrusion may not be sufficiently obtained. On the other hand, when the accelerating voltage is 600 kV or higher, the pre-vulcanization on the surface of the carcass treat excessively proceeds, which may negatively affect the formability or durability of the tire. When the irradiation dose of the electron beam is less than 10 kGy, the penetration of the electron beam becomes insufficient, and the pre-vulcanization is performed only on the surface of the carcass treat, and therefore, the effect of suppressing the occurrence of tire inner surface cord protrusion may not be sufficiently obtained. On the other hand, when the irradiation dose of the electron beam is 100 kGy or higher, the pre-vulcanization on the surface of the carcass treat excessively proceeds, which may negatively affect the formability or durability of the tire.

In the pneumatic tire of the present invention, only satisfying the condition of the above-mentioned carcass structure is important. Other conditions such as the tire structure in detail and the material of each of the members are not particularly limited. The tire can be constituted by appropriately selecting the conventionally known conditions.

For example, in the illustrated tire, outside the crown portion of the carcass 2 in the tire radius direction, two belt layers 3 and one belt reinforcing layer 4 are positioned in the mentioned order from inside layer. Among these, the belt layer 3 are composed of a rubberized layer in which cords are arrayed in parallel having a predetermined angle with respect to the tire circumferential direction, preferably a rubberized steel cord layer. The belt layers are provided with at least one layer, and are usually provided with two layers positioned crossed with each other as illustrated. The belt reinforcing layer is composed of a rubberized layer in which organic fiber cords are arrayed substantially in parallel with respect to the tire circumferential direction. In the illustrated example, the belt reinforcing layer is composed of one cap layer 4 arranged over the overall width of the belt layer 3 and a pair of layered layer (not illustrated) arranged on the both ends area of belt layer 3. In the present invention, the arrangement of a belt reinforcing layer is not necessary, and a belt reinforcing layer having another structure may be used, and the number of layers is not limited to that of the illustrated example.

In the tire 10 illustrated in Fig. 1, a bead filler (bead apex rubber) 5 is placed between a body portion 2A and a turn-up portion 2B of the carcass 2 outside in the tire radial direction of the bead core 1. Although usually the bead filler 5 has a height of about 10 to 60 mm in the tire radial direction, in the present invention, as shown in a tire 20 illustrated in Fig. 2, a bead filler 6 having a height as small as 15 mm or smaller in the tire radial direction may be used. Also in this case, due to high strength of a treat used for a carcass, the tire rigidity can be maintained. When the height of the bead filler is zero, that is, when there is no bead filler between carcass cords before and after the winding up around the bead core 1, a similar effect can be obtained. Further, although not illustrated, even when the height of the turn-up portion of the carcass cord wound up around the bead core 1 is as low as 15 mm or smaller, the tire rigidity can be similarly retained since the strength of a treat used for a carcass is high.

Still further, in a tire of the present invention, on the surface of the tread portion 13, a tread pattern is appropriately formed, and on the innermost layer, an inner liner (not illustrated) is formed. Still further, in the tire of the present invention, as a gas with which the tire to be filled, a normal air or an air whose oxygen partial pressure is changed, or an inert gas such as nitrogen can be used.

EXAMPLES

The present invention will now be described in detail by way of Examples.

An organic fiber cord satisfying the conditions listed on the following Table was applied to a carcass to manufacture a pneumatic tire of size 205/55R16. The belt layer was composed of two rubberized steel cord layers. The two layers were positioned crossed with each other having angles of $\pm 25°$ with respect to the tire circumferential direction. When a tire was molded, one side of the carcass treat was subjected to an electron beam irradiation treatment. The carcass treat was positioned such that the irradiated area was inside the tire. The results of the evaluations for the obtained test tires were shown in combination in the Table below.

Here, the cord strength and cord elongation of the reinforcing cord in the following Examples and Comparative Examples were controlled by adjusting dipping conditions such as treatment temperature, tension at the treatment and treatment time in a dip treatment process during manufacturing of the cord. In concrete, each reinforcing cord was obtained by changing the conditions in the following range, for a dry zone, a first heat elongation part (heat setting zone) and a second heat elongation part (normalizing zone) in the tension heat treatment process which is performed after giving a cord an RFL (resorcin-formaldehyde) adhesive. In the dry zone, the treatment temperature was set to 160°C, treatment time 60 seconds and the tension in a range of 0.7 to 0.9 g/dtex. The treatment temperature in the heat setting zone and the normalizing zone was set to 240°C and the treatment time 60 seconds. Further, the tension of the heat setting zone was set in a range of 0.7 to 0.9 g/dtex and the tension of the normalizing zone was set in a range of 0.3 to 0.5 g/dtex.

(1) Tire weight

The tire weights were indicated as an index setting the tire weight of Comparative Example 1 to 100. The smaller the value of the index, the lighter and more excellent.

(2) Side cut resistance

Each test tire was mounted to a prescribed rim, and the tire is inflated to a prescribed inner pressure. Thereafter, a convex protrusion, the tip of which had a radius of curvature of R = 10 (mm) was pressed on the side portion to measure a work required for the side portion to be cut. The results were indicated as an index setting the work required for side cut of the tire of the Comparative Example 1 to 100. The larger the value, the better the side cut resistance.

[Table 1]

| | Example 1 | Example 2 | Example 3 | Comparative Example 1 | Comparative Example 2 | Comparative Example 3 |
|---|---|---|---|---|---|---|
| Carcass structure | 1 ply | 1 ply | 1 ply | 1 ply | 1 ply | 1 ply |
| Material | PET | PET | PET | PET | PET | PET |
| Cord size | 2200 dtex/2 | 2200 dtex/2 | 2500 dtex/2 | 1670 dtex/2 | 1670 dtex/2 | 2200 dtex/2 |
| Dipped cord strength (cN/dtex) | 7 | 7 | 6.8 | 7 | 7 | 7 |

(continued)

| | Example 1 | Example 2 | Example 3 | Comparative Example 1 | Comparative Example 2 | Comparative Example 3 |
|---|---|---|---|---|---|---|
| Dipped cord elongation at stress loading of 2cN/dtex (%) | 3.8 | 3.8 | 3.6 | 3.6 | 3.6 | 3.8 |
| Heat shrinkage stress of dipped cord at 177°C (N) | 8.0 | 8.0 | 11.5 | 4.8 | 4.8 | 8.0 |
| Cord occupancy rate (%) | 78.0 | 78.0 | 75.0 | 71.5 | 71.5 | 78.0 |
| Dipped cord diameter $\varphi$ (mm) | 0.78 | 0.78 | 0.82 | 0.65 | 0.65 | 0.78 |
| Minimum gauge D (mm) | 3 | 2 | 3 | 3 | 4 | 1.50 |
| $\varphi/D$ | 0.26 | 0.39 | 0.27 | 0.22 | 0.16 | 0.52 |
| Strength of a treat per unit width (kN/cm) | 3.08 | 3.08 | 3.11 | 2.57 | 2.57 | 3.08 |
| Twist coefficient $\alpha$ | 0.48 | 0.48 | 0.50 | 0.48 | 0.48 | 0.48 |
| Tire weight (index) | 100 | 95 | 100 | 100 | 105 | 92 |
| Side cut resistance (index) | 110 | 103 | 112 | 100 | 103 | 95 |

As listed on the above Table, it is clear that, in each tire of the Examples in which the occupancy rate of an organic fiber cord of a treat which constitutes a carcass, and the ratio of the diameter of the organic fiber cord and the gauge of a tire in a side wall portion were set to specific ranges, both the light weight and the side cut resistance of the tire were satisfied. On the other hand, in Comparative Example 2, the ratio of the cord diameter of the above-mentioned organic fiber cord to the gauge of the tire was too small, and the light weight effect was compromised although the side cut resistance was excellent. In Comparative Example 3, the ratio of the cord diameter of the above-mentioned organic fiber cord to the gauge of the tire was too large, and the side cut resistance deteriorated although the light weight effect was obtained.

DESCRIPTION OF SYMBOLS

| | |
|---|---|
| 1 | Bead core |
| 2 | Carcass |
| 2A | Body portion of carcass |
| 2B | Turn-up portion of carcass |
| 3 | Belt layer |
| 4 | Belt reinforcing layer |
| 5, 6 | Bead filler (bead apex rubber) |
| 10, 20 | Pneumatic tire |
| 11 | Bead portion |
| 12 | Side wall portion |
| 12A | Tread side region of side wall portion |
| 13 | Tread portion |

**Claims**

1. A pneumatic tire which is composed of a pair of bead portions, a pair of side wall portions extending from the pair of bead portions, and a tread portion bridging both side wall portions and which comprises one or more carcasses extending toroidally between the pair of bead portions, **characterized in that**
the carcass is constituted of a treat which is an organic fiber cord coated with rubber; the occupancy rate of the organic fiber cord in the treat is 70% or higher; and the ratio of the cord diameter φ (mm) of the organic fiber cord as a dip treated cord to the minimum value D (mm) of the gauge in the thickness direction of the tire at an external region of the side wall portion in the tire radial direction from the maximum width portion of a tire when the tire is mounted to a rim satisfies the relationship represented by the expression below:

$$0.25 < \varphi/D < 0.50.$$

2. The pneumatic tire according to claim 1, wherein the cord diameter φ of the organic fiber cord as a dip treated cord is larger than 0.75 mm and smaller than 0.96 mm.

3. The pneumatic tire according to claim 1, wherein the cord strength of the organic fiber cord as a dip treated cord is 6.5 to 7.2 cN/dtex.

4. The pneumatic tire according to claim 1, wherein the total decitex of the organic fiber cord as a twisted cord is 4300 to 5100 dtex.

5. The pneumatic tire according to claim 1, wherein the cord elongation of the organic fiber cord as a dip treated cord at a stress loading of 2 cN/dtex is 3.5 to 4.0%.

6. The pneumatic tire according to claim 1, wherein the strength of the treat per unit width is 2.9 to 3.2 kN/cm.

7. The pneumatic tire according to claim 1, wherein the heat shrinkage stress of the organic fiber cord as a dip treated cord at 177°C is 6 to 12 N.

8. The pneumatic tire according to claim 1, wherein the twist coefficient α of the organic fiber cord defined by the expression below:

$$\alpha = \tan\theta = 0.001 \times N \times \sqrt{(0.125 \times d/\rho)}$$

(in the expression, N is the number of twist (/10 cm), d is a value which is half of the total decitex of a cord, and ρ is the specific gravity of the cord) is 0.42 to 0.55.

9. The pneumatic tire according to claim 1, wherein one side of the treat is subjected to an electron beam irradiation treatment as a pre-vulcanization under the following conditions: an accelerating voltage of 200 kV or higher and smaller than 600 kV, and an irradiation dose of 10 to 100 kGy; and the treat is placed such that the irradiated area is on the inside of the tire.

10. The pneumatic tire according to claim 1, wherein the organic fiber cord is composed of polyester fiber.

11. The pneumatic tire according to claim 10, wherein the organic fiber cord is composed of a polyethylene terephthalate fiber.

**Patentansprüche**

1. Luftreifen, bestehend aus einem Paar Wulstteilen, einem Paar Seitenwandteilen, welche sich aus dem Paar Wulstteilen erstrecken, und aus einem Laufflächenteil, welcher die beiden Seitenwandteile überbrückt und welcher eine oder mehrere Karkassen umfasst, welche sich torusförmig zwischen dem Paar Wulstteilen erstrecken, **dadurch gekennzeichnet dass**

die Karkasse aus einem behandelten Element besteht, welches ein organischer mit Gummi beschichteter Fasercord ist, wobei die Füllrate des organischen Fasercords im behandelten Element größer oder gleich 70% ist; und das Verhältnis zwischen Corddurchmesser φ (mm) des organischen Fasercords, als durch Eintauchen behandelten Cords, und dem Mindestwert D (mm) der Abmessung in der Richtung der Dicke des Reifens, in einem äußeren Bereich des Seitenwandteiles in der radialen Richtung des Reifens, von dem Bereich maximaler Breite eines Reifens, wenn der Reifen auf einer Felge montiert ist, die von folgendem Ausdruck dargestellte Beziehung erfüllt:

$$0,25 < \varphi/D < 0,50.$$

2. Luftreifen nach Anspruch 1, wobei der Corddurchmesser φ des organischen Fasercords, als durch Eintauchen behandelten Cords, größer als 0,75 mm und kleiner als 0,96 mm ist.

3. Luftreifen nach Anspruch 1, wobei die Cordfestigkeit des organischen Fasercords als durch Eintauchen behandelten Cords, zwischen 6,5 und 7,2 cN/dtex liegt.

4. Luftreifen nach Anspruch 1, wobei die decitex des organischen Fasercords als verdrillten Cords insgesamt zwischen 4300 und 5100 dtex liegen.

5. Luftreifen nach Anspruch 1, wobei die Dehnung des organischen Fasercords, als durch Eintauchen behandelten Cords, bei einer Belastung von 2 cN/dtex, zwischen 3,5 und 4,0% liegt.

6. Luftreifen nach Anspruch 1, wobei die Festigkeit des behandelten Elements pro Breiteneinheit zwischen 2,9 und 3,2 kN/cm liegt.

7. Luftreifen nach Anspruch 1, wobei die Wärmeschrumpfspannung des organischen Fasercords, als durch Eintauchen behandelten Cords, bei 177°C, zwischen 6 und 12 N liegt.

8. Luftreifen nach Anspruch 1, wobei der Verdrillungskoeffizient α des organischen Fasercords, welcher durch folgenden Ausdruck definiert ist:

$$\alpha = \tan\theta = 0,001 \text{ x } N \text{ x } \sqrt{(0,125 \text{ x } d/\rho)}$$

(in dem Ausdruck ist N die Anzahl an Verdrillungen (/10 cm), d ein Wert, welcher der Hälfte der gesamten decitex eines Cords entspricht, und ρ das spezifische Gewicht des Cords) zwischen 0,42 und 0,55 liegt.

9. Luftreifen nach Anspruch 1, wobei eine Seite des behandelten Elements einer Behandlung mittels Elektronenbündelbestrahlung, als Vor-Vulkanisationsschritt, ausgesetzt ist, unter folgenden Bedingungen: einer Beschleunigungsspannung, welche größer oder gleich 200 kV und kleiner als 600 kV ist, und eine Bestrahlungsdosis zwischen 10 und 100 kGy; und wobei das behandelte Element so angeordnet wird, dass die bestrahlte Fläche auf der Innenseite des Reifens liegt.

10. Luftreifen nach Anspruch 1, wobei der organische Fasercord aus Polyesterfasern besteht.

11. Luftreifen nach Anspruch 10, wobei der organische Fasercord aus Polyethylenterephtalatfasern besteht.

## Revendications

1. Bandage pneumatique, étant constitué par une paire de parties de talon, une paire de parties de flanc, s'étendant à partir de la paire de parties de talon, et une partie de bande de roulement reliant les deux parties de flanc et comprenant une ou plusieurs carcasses s'étendant toroïdalement entre la paire de parties de talon, **caractérisé en ce que** :

la carcasse est constituée par un élément traité, à savoir un câblé de fibres organiques revêtu de caoutchouc, le taux d'occupation du câblé de fibres organiques dans l'élément traité correspondant à 70% ou plus ; et le rapport entre le diamètre du câblé φ (mm) du câblé de fibres organiques, constituant un câblé traité par immersion, et la valeur minimale D (mm) du calibre dans la direction de l'épaisseur du bandage pneumatique, au niveau d'une région externe de la partie de flanc dans la direction radiale du bandage pneumatique, à partir de la partie à largeur maximale d'un bandage pneumatique, lorsque le bandage pneumatique est monté sur une jante, satisfaisant la relation représentée par l'expression ci-dessous :

$$0,25 < φ/D < 0,50.$$

2. Bandage pneumatique selon la revendication 1, dans lequel le diamètre de câblé φ du câblé de fibres organiques, constituant un câblé traité par immersion, est supérieur à 0,75 mm et inférieur à 0,96 mm.

3. Bandage pneumatique selon la revendication 1, dans lequel la résistance du câblé de fibres organiques, constituant un câblé traité par immersion, est comprise entre 6,5 et 7,2 cN/dtex.

4. Bandage pneumatique selon la revendication 1, dans lequel le décitex total du câblé de fibres organiques, constituant un câblé torsadé, est compris entre 4300 et 5100 dtex.

5. Bandage pneumatique selon la revendication 1, dans lequel l'allongement du câblé du câblé de fibres organiques, constituant un câblé traité par immersion, en présence d'une charge de contrainte de 2 cN/dtex, est compris entre 3,5 et 4,0%.

6. Bandage pneumatique selon la revendication 1, dans lequel la résistance du moyen de traitement par unité de largeur est comprise entre 2,9 et 3,2 kN/cm.

7. Bandage pneumatique selon la revendication 1, dans lequel la contrainte de retrait thermique du câblé de fibres organiques, constituant un câblé traité par immersion, est comprise entre 6 et 12 N à 177°C.

8. Bandage pneumatique selon la revendication 1, dans lequel le coefficient de torsion α du câblé de fibres organiques défini par l'expression ci-dessous :

$$α = \tanθ = 0,001 \text{ x } N \text{ x } \sqrt{(0,125 \text{ x } d/ρ)}$$

(dans l'expression, N représente le nombre de torsions (/10 cm), d représente une valeur constituant la moitié du décitex total d'un câblé, et p représente la masse volumique du câblé), est compris entre 0,42 et 0,55.

9. Bandage pneumatique selon la revendication 1, dans lequel un côté de l'élément traité est exposé à une irradiation par faisceau d'électrons, constituant une prévulcanisation dans les conditions suivantes : une tension d'accélération de 200 kV ou plus et inférieure à 600 kV, et une dose d'irradiation comprise entre 10 et 100 kGy ; l'élément traité étant placé de sorte que la zone irradiée se situe sur l'intérieur du bandage pneumatique.

10. Bandage pneumatique selon la revendication 1, dans lequel le câblé de fibres organiques est composé de fibres de polyester.

11. Bandage pneumatique selon la revendication 10, dans lequel le câblé de fibres organiques est composé de fibres de téréphtalate de polyéthylène.

[Fig. 1]

[Fig. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001163 A

- JP 2008001164 A